# EUROPÄISCHE PATENTANMELDUNG

(11) **EP 1 174 972 A2**
(43) Veröffentlichungstag der Anmeldung: **23.01.2002**
(21) Anmeldenummer: 01115413.5
(22) Anmeldetag: 27.06.2001
(51) Int. Cl.: H02G 3/12

(54) **Anordnung von Einbaudosen für die Betonbauinstallation**

(30) Priorität: 19.07.2000 DE 10035022
(71) Anmelder: Kaiser GmbH & Co. KG, 58579 Schalksmühle (DE)
(72) Erfinder: Behrendt, Hans Joachim, 58589 Schalksmühle (DE); Engler, Peter, 57074 Siegen (DE)
(74) Vertreter: Patentanwälte Dipl.-Ing. Conrad Köchling Dipl.-Ing. Conrad-Joachim Köchling

(57) **Zusammenfassung**

Um eine Anordnung von Einbaudosen (1) für die Betonbauinstallation mit einem Aufnahmeraum für elektrotechnische Installationselemente mit Seitenwandungen, Bodenwandung (2) und einer Stirnwand auf der der Bodenwandung (2) abgewandten Seite, wobei insbesondere bei liegender Betonbauschalung eine Einbaudose (1) mit der Stirnwand an der Schalung befestigbar ist oder ein Gegenlager an der Schalung befestigbar ist, die Einbaudose (1) oder das Gegenlager über einen Abstandhalter mit einer zweiten Einbaudose (1) gekoppelt ist, deren Stirnwand der Schalung abgewandt orientiert ist zu schaffen, bei der dem Anwender die Möglichkeit gegeben ist, unterschiedliche Abstände der einander gegenüberliegenden Einbaudosen oder zwischen Abstandhalter und Einbaudose herzustellen, wobei der Anwender auf möglichst einfache Teile zurückgreifen kann, wird vorgeschlagen, dass der Abstandhalter durch mindestens ein Modul (3) gebildet ist, welches mehrere Arme (4) aufweist, deren obere und untere Randkanten zwei voneinander im Modulmaß beabstandete Stützebenen aufspannen, deren erste in Einbausollage an der Außenseite der Bodenwandung (2) anliegt, deren zweite an der Bodenwandung (2) der zweiten Einbaudose (1) oder an einer entsprechenden Fläche des Gegenlagers oder an der ersten Stützebene (gebildet durch die Randkanten) eines weiteren Moduls (3) anliegt.

## Beschreibung

Die Erfindung betrifft eine Anordnung von Einbaudosen für die Betonbauinstallation mit einem Aufnahmeraum für elektrische Einrichtungen wie Leuchten, Dosen, Klemmen oder dergleichen elektrotechnische Installationselemente, mit Seitenwandungen, Bodenwandung und einer Stirnwand auf der der Bodenwandung abgewandten Seite, wobei die Stirnwand eine im wesentlichen kreisrunde Installationsöffnung aufweist, wobei insbesondere bei liegender Betonbauschalung eine Einbaudose mit der Stirnwand an der Schalung befestigbar ist oder ein Gegenlager an der Schalung befestigbar ist, die Einbaudose oder das Gegenlager über einen Abstandhalter mit einer zweiten Einbaudose oder mit der ersten Einbaudose gekoppelt ist, deren Stirnwand der Schalung abgewandt orientiert ist.

Im Stand der Technik ist eine solche Anordnung bekannt. Insbesondere bei liegender Schalung, wie sie vorzugsweise in Betonwerken zur Herstellung von Bauteilen eingesetzt wird, hat die liegende Schalung praktisch nur eine Schalungsseite. Die Installation von Einbaudosen und dergleichen wird ebenso wie der Einbau der Bewehrung und aller übrigen Einbauteile an einer Schalungsseite durchgeführt. Einbaudosen oder dergleichen, die in der Frontebene des Betonbauteiles liegen sollen, die der Schalung zugewandt ist, werden unmittelbar auf die Schalung aufgebracht und an dieser fixiert.

Sofern beispielsweise direkt gegenüberliegend Dosen angeordnet sein sollen oder nur auf der der Schalung abgewandte Seite des zu fertigenden Bauteils Dosen angeordnet werden sollen, so werden entweder die einander gegenüberliegenden Einbaudosen über Rohre oder Stangen auf den gewünschten Abstand gebracht und gegenseitig fixiert oder aber es wird ein Gegenlager mit Stützrohren oder dergleichen eingesetzt, wobei an dem anderen Ende der Stützrohre entsprechende Einbaudosen oder dergleichen gehaltert sind.

Diese Anordnung ist insofern nachteilig, als der jeweilige Abstandhalter bestimmte Länge aufweist. Der Hersteller solcher Abstandhalter liefert diese zwar in unterschiedlichen Längen, jedoch können nicht beliebige Abstände eingestellt werden. Zudem ist eine entsprechende Lagerhaltung erforderlich.

Ausgehend von diesem Stand der Technik liegt der Erfindung die Aufgabe zugrunde, eine Anordnung gattungsgemäßer Art zu schaffen, bei der dem Anwender die Möglichkeit gegeben ist, unterschiedliche Abstände der einander gegenüberliegenden Einbaudosen oder zwischen Abstandhalter und Einbaudose einzustellen, wobei der Anwender auf möglichst wenige einfache Teile zurückgreifen kann.

Zur Lösung dieser Aufgabe wird vorgeschlagen, dass der Abstandhalter durch mindestens ein Modul gebildet ist, welches mehrere in einer Ebene liegende Arme aufweist, deren obere und untere Randkanten zwei voneinander in einem Modulmaß beabstandete Stützebenen aufspannen, deren erste in einer Einbausollage an der Außenseite der Bodenwandung anliegt, deren zweite in dieser Einbausollage an der Bodenwandung der zweiten Einbaudose oder an einer entsprechenden Fläche des Gegenlagers oder an der ersten Stützebene (gebildet durch die Randkanten) eines weiteren Moduls anliegt.

Mit dem erfindungsgemäßen Modul ist es möglich, unterschiedlichste Abstände des Abstandhalters vorzusehen, indem je nach Dicke des zu fertigenden Betonbauteiles ein oder mehrere Module aufeinander gefügt und auf die Bodenwandung der Einbaudose aufgelegt oder auf die entsprechende Fläche des Gegenlagers aufgelegt werden. Auf das letzte Modul wird dann die gegenüberliegende Einbaudose mit ihrer Bodenwandung aufgelegt. Der Abstand zwischen den entsprechenden Einbauteilen ist somit einstellbar, wobei der Anwender eines oder mehrere Module benötigt. Bei der Fertigung dieser Teile ist es also lediglich erforderlich, eine Vielzahl von identischen Modulen zu fertigen, die dann dem Anwender zur Einstellung von unterschiedlichen Abständen zur Verfügung stehen. Dies bedeutet auch eine Vereinfachung der Lagerhaltung.

Zudem wird durch die Module, die mehrere Arme aufweisen, eine relativ große Stützfläche zur Verfügung gestellt, wobei die Stützarme der aufeinander geschichteten Module jeweils sich aufeinander abstützen und das jeweils erste bzw. letzte Modul sich an der Bodenwandung der Einbaudose oder an der entsprechenden Fläche des Gegenlagers anlegt. Die Module können beliebiger Weise miteinander verbunden und auch mit der Bodenwandung oder der Fläche des Gegenlagers verbunden werden, so dass ein sicherer Zusammenhalt bis zum Aushärten der Vergußmasse (Beton) gewährleistet ist. Durch die Abstützung der Module aufeinander und auf der Bodenwandung bzw. der Fläche des Gegenlagers wird eine gute Kraftverteilung erreicht, so dass auch üblicherweise auftretende Lasten schadlos aufgenommen werden können, solange die Teile noch nicht mit Beton vergossen sind.

Besonders bevorzugt ist vorgesehen, dass die Arme des Moduls durch schmale Stege mit zueinander parallelen oberen und unteren Randkanten gebildet sind, die die Stützebenen aufspannen bzw. bilden, wobei die Steghöhe die Modulhöhe bestimmt.

Zudem wird als vorteilhaft angesehen, wenn die Steghöhe der Arme wenige Zentimeter, vorzugsweise etwa einen Zentimeter beträgt.

Besonders bevorzugt ist vorgesehen, dass die vier Arme in Kreuzform zueinander gerichtet verlaufen.

Durch diese Ausbildung wird eine besonders gleichmäßige und großflächige Abstützung der Elemente aufeinander und aneinander sichergestellt.

Es kann bevorzugt vorgesehen sein, dass die Arme eine angenäherte U-Form bilden. Auch hierdurch wird eine gleichmäßige und großflächige Abstützung der Elemente aufeinander und aneinander gewährleistet.

Desweiteren ist bevorzugt vorgesehen, dass die Arme an ihren freien Enden kurze Querstege aufweisen, deren Höhe gleich der Steghöhe der Arme ist.

Hierdurch werden Versteifungen gebildet, die für eine gute Lastaufnahme und Lastverteilung vorteilhaft sind. In der Draufsicht sind die Arme an ihren mit den Querstegen versehenen Enden T-förmig ausgebildet.

Eine besonders bevorzugte Weiterbildung wird darin gesehen, dass die Module miteinander und mit der Bodenwandung der Einbaudose(n) bzw. der Fläche des Gegenlagers steckverbindbar sind.

Durch diese Ausbildung ist eine einfache und ausreichend sichere Verbindung der Module miteinander und mit der Einbaudose bzw. mit einem entsprechenden Gegenlager sichergestellt.

Dabei ist bevorzugt vorgesehen, dass die Steckverbindungsmittel als Steckhülsen und Steckzapfen ausgebildet sind.

Besonders bevorzugt ist vorgesehen, dass die Steckhülsen und Steckzapfen druckknopfartige Verbindungsmittel bilden.

Dabei ist bevorzugt vorgesehen, dass die Steckzapfen mindestens eine umlaufende Rastwulst und die Steckhülsen mindestens eine entsprechende umlaufende Rastnut oder Rastkante aufweisen, in die oder hinter die die Rastwulst in der Steckverbindungslage greift.

Desweiteren kann bevorzugt vorgesehen sein, dass die Steckzapfen längsgeschlitzt sind, so dass sie bei der Herstellung einfach entformbar sind und eine leichtgängige Verrastung ermöglicht ist.

Durch die druckknopfartigen Verbindungsmittel ist die Lagesicherheit der Teile zueinander in der Steckverbindungslage gewährleistet, so dass auch beim Betonieren ein Aufschwimmen der Teile und ein relatives Trennen der Teile voneinander mit Sicherheit vermieden ist.

Besonders bevorzugt ist vorgesehen, dass jeder der vier Arme äquidistant vom Kreuzungsmittelpunkt der Arme eine Steckhülse und einen Steckzapfen aufweisen, die koaxial zueinander gerichtet sind, wobei die benachbarten Arme die Steckhülsen und Steckzapfen in entgegengesetzter Orientierung gerichtet aufweisen, wobei die Bodenwandung der Einbaudose(n) bzw. die Fläche des Gegenlagers an entsprechenden Stellen jeweils eine Steckhülse oder einen Steckzapfen aufweisen.

Durch diese Anordnung können bei gleicher Anordnung und bei gleichen Bauteilen in einfacher Weise die Steckverbindungen von Elementen übereinander miteinander in Eingriff gebracht werden, wobei es auch möglich ist, zwei Einbaudosen mit ihren Bodenwandungen unmittelbar aneinander anliegend zusammenzustecken.

Eine besondere Variante wird darin gesehen, dass die eine U-Form bildenden Arme am freien Schenkelende und in den Übergangsbereichen der Schenkel zur Basis der U-Form Steckhülsen bzw. Steckzapfen aufweisen, wobei die Steckhülsen und Steckzapfen in Umlaufrichtung der U-Form wechselnde Orientierung aufweisen und die Bodenwandung der Einbaudose(n) bzw. die Fläche des Gegenlagers an entsprechenden Stellen abwechselnd jeweils eine Steckhülse oder einen Steckzapfen aufweisen.

Eine besonders bevorzugte Weiterbildung wird darin gesehen, dass jedes Modul an zwei zueinander parallelen Randkanten, die durch die gedachte Verbindung zweier Enden benachbarter Arme oder der benachbarten Eckbereiche der U-Form gebildet sind, jeweils an der ersten Randkante Steckhülsen und an der zweiten Randkante Steckzapfen aufweisen, die paarweise (jeweils eine Steckhülse und ein Steckzapfen) koaxial zueinander ausgerichtet sind und deren Mittelachsen parallel zu den Stützebenen des Moduls verlaufen, wobei der Abstand der Steckhülsen der ersten Randkante voneinander und der Abstand der Steckzapfen der zweiten Randkante voneinander dem diagonalen Abstand zweier Steckzapfen bzw. zweier Steckhülsen der Bodenwandung der Einbaudose bzw. des Gegenlagers entspricht.

Durch diese Ausbildung ist es möglich, entsprechende Module nicht nur flach, parallel zur Schalungsfläche bzw. zur Bodenwandung der Einbaudose auszurichten und anzuordnen, sondern es ist auch zur Überwindung und Überbrückung größerer Abstände möglich, die Module aufrecht relativ zur Schalungsfläche und zur Bodenfläche der Einbaudose auszurichten und rastend mit den entsprechenden Elementen (Bodenfläche der Einbaudose, weitere Module oder Bodenflächen einer weiteren Einbaudose oder eines Gegenlagers) zu verbinden, wobei die maßliche Abstimmung so vorgenommen ist, dass die entsprechenden Steckzapfen und Steckhülsen, beispielsweise der Einbaudose, die in den Ecken eines Quadrates liegen, diagonal zur Verrastung der aufrecht stehenden Module genutzt werden. Zur Verbesserung der Lagesicherheit können dabei jeweils zwei Module kreuzweise ineinandergesteckt werden und mit den entsprechenden Anschlußteilen steckverbunden werden.

Eine bevorzugte Weiterbildung wird darin gesehen, dass die Arme jedes Moduls an einen mittig oder außermittig des Moduls ausgebildeten Rohrclip anschließen, der aus einem radial einseitig offenen ringförmigen Steg oder aus einer quer zur Rohrclipachse einseitig offenen Haltesteganordnung gebildet ist, der die gleiche Steghöhe wie die Arme aufweist und von dem radial die Arme des Moduls abragen, oder dass die in U-Form ausgebildeten Arme, die an den Enden und in den Ecken die Steckhülsen und Steckzapfen aufweisen, einen außermittig oder mittig des Moduls angeordneten Rohrclip umfassen, der aus einem radial einseitig offenen ringförmigen Steg oder aus einer quer zur Rohrclipachse einseitig offenen Haltesteganordnung gebildet ist, der oder die die gleiche Steghöhe wie die Arme aufweist, wobei die Öffnung des Rohrclips gleichgerichtet zur Öffnung der U-Form verläuft.

Durch diese Ausbildung ist es möglich, beispielsweise ein Leerrohr zwischen zwei durch die Module miteinander verbundenen Einbaudosen anzuordnen und eine entsprechende Durchverdrahtung durch dieses Leerrohr zu führen, wobei das Leerrohr in den Rohrclip eingeschoben und verclipst werden kann, so dass die Mündungen des Rohres an den beiden durch die Module verbundenen Einbaudosenwandungen anliegen.

Eine besonders vorteilhafte Weiterbildung eines Moduls nach einem der Ansprüche 1 bis 15 wird darin gesehen, dass mindestens ein Modul, vorzugsweise mehrere mit Abstand voneinander angeordnete Module, auf ein Installationsrohr aufgeclipst ist bzw. sind, wobei zwei benachbarte Arme des Moduls oder die Schenkelenden oder ein Schenkel oder die Basis des U-förmigen Moduls auf einer Stützfläche abstützbar sind und das Installationsrohr auf Abstand von der Stützfläche halten.

Das entsprechende Modul in der Ausbildung mit Armen und Rohrclip, insbesondere mit vier einander im wesentlichen kreuzenden Armen ist dazu geeignet, auf ein Installationsrohr aufgeclipst zu werden, so dass das Installationsrohr dann mit den Armen des Moduls auf einer Stützfläche, beispielsweise auf der Schalungsfläche abstützbar ist. Das Modul dient damit als Abstandhalter bei der Verlegung von Leerrohren auf der entsprechenden Schalung.

Desweiteren kann bevorzugt vorgesehen sein, dass an den Enden mindestens zweier benachbarter Arme oder an den Schenkelenden der U-Form des Moduls sich parallel zu einer Stützfläche erstreckende Stützstege ausgebildet sind.

Dabei ist bevorzugt vorgesehen, dass die Stützstege an der Stützfläche klebebefestigbar sind.

Zudem kann bevorzugt vorgesehen sein, dass die Stützstege auf ihrer der Stützfläche zugewandten Fläche Klebemittel aufweisen.

Durch diese Ausbildung ist es möglich, das Modul relativ standfest auf einer Stützfläche, beispielsweise auf der Schalungsoberfläche abzustützen, so dass das in die Clipse eingeclipste Rohr oder dergleichen ausreichend lagesicher gehalten ist. Um die vorläufige Verbindung bis zum Aufbringen des Betonmaterials noch sicherer zu gewährleisten, können die Stützstege an der entsprechenden Stützfläche der Schalung klebbefestigt werden, wozu vorzugsweise auf der entsprechenden Fläche der Stützstege Klebemittel in Form von Klebepads oder dergleichen vorgesehen sein können, die zunächst mit einer Schutzfolie abgedeckt sind. Zur Benutzung kann die Schutzfolie abgezogen werden und die Module können mit den Stützstegen auf die entsprechende Stützfläche der Schalung aufgeklebt werden.

Zudem ist bevorzugt vorgesehen, dass das Modul aus Kunststoff besteht.

Bei der Anordnung solcher Betoneinbaudosen ergibt sich auch die Notwendigkeit, dass beispielsweise in ein Deckenteil eingebaute Einbaudosen dazu benutzt werden sollen, einen Schraubhaken einzubringen, um daran eine Leuchte oder dergleichen anhängen zu können.

Um diesbezüglich eine Montageerleichterung zu schaffen, wird vorgeschlagen, dass an der Bodenwandung außenseitig ein Stützelement befestigbar ist, welches eine Schraubenmutter haltert, wobei die Schraubenmutter in das Material des Stützelements eingebettet ist und lediglich einen in Sollage zur Bodenwandung hin offenen Einschraubkanal aufweist, dessen Mündung an der Bodenwandung anliegt, und dass die Bodenwandung im Bereich der Mündung von dem Gewindeteil eines in die Installationsöffnung der Einbaudose eingesetzten Schraubenhakens durchgreifbar ist. Die Bodenwandung der Einbaudose kann beispielsweise eine Perforation oder eine in anderer Weise leicht durchbrechbare Ausbildung in dem Bereich aufweisen, in welchem der Schraubhaken mit seinem Gewindeschaft eingesteckt werden soll. Es ist durch diese Anordnung in einfacher Weise möglich, das Stützelement zunächst vor Vergießen der Betonmasse auf die Bodenwandung der Einbaudose aufzubringen. Sodann wird die entsprechende Anordnung mit Betonmasse vergossen. Das Stützelement sitzt dann sicher in der Betonmasse und ist durch die Installationsöffnung der Einbaudose erreichbar, so dass der Gewindeschaft eines Schraubhakens oder dergleichen eingeschraubt werden kann.

Bevorzugt ist dabei vorgesehen, dass das Stützelement mindestens zwei Arme mit Steckhülsen und Steckzapfen aufweist, die auf entsprechende Steckzapfen bzw. in entsprechende Steckhülsen der Bodenwandung steckbar sind.

Auf diese Weise ist es möglich das Stützelement in einfacher Weise mit der Bodenwandung der Einbaudose zu verbinden, wobei die Verbindung auch ausreichend sicher ist, so dass sie nicht während des Aufbringens der Betonmasse aufgehoben wird und das Stützelement sich verschieben kann.

Bevorzugt ist zudem vorgesehen, dass die vom Stützelement umfasste Schraubenmutter in Montagesollage mittig der Bodenwandung angeordnet ist.

Besonders bevorzugt ist noch vorgesehen, dass die Schraubenmutter als Gewindehülse mit Polygonkopf ausgebildet und drehfest im Material des Stützelementes eingebettet ist.

Auf diese Weise ist eine drehfeste Anordnung der Schraubenmutter in dem Stützelement gewährleistet, wobei zudem eine erheblich lange Gewindeausbildung zum Einschrauben des Gewindeschaftes eines Hakens oder dergleichen zur Verfügung gestellt ist.

Desweiteren ist bevorzugt vorgesehen, dass die Schraubenmutter, insbesondere die Gewindehülse, in einer sacklochartigen Ausnehmung des Stützelementes angeordnet ist, wobei die Ausnehmung eine in Richtung auf die Bodenwandung gegenüber der Schraubenmutter bzw. Gewindehülse vorragende Mündung aufweist, die insbesondere etwas konisch erweitert ist. Durch die konische Erweiterung ist sichergestellt, dass ein durch den Boden der Einbaudose gesteckter Schraubhaken auch sicher in die Gewindeausbildung der Gewindehülse eingefädelt werden kann. Zudem ist durch die zurückversetzte Anordnung der Gewindehülse gegenüber der Mündung erreicht, dass eine ausreichende Abdichtung gegen eintretendes Betonmaterial oder dergleichen gewährleistet ist, wobei zudem selbst dann, wenn Betonschlamm oder dergleichen einläuft, hierdurch das Gewinde bzw. die Gewindehülse nicht verschmutzt wird.

Um eine Einbauhilfe für die lagerichtige Anordnung und Ausrichtung der Einbaudosen auf der Schalungsfläche zu erreichen, wobei die Schalungsfläche als ebener Schaltisch für die liegende Betonbauschalung ausgebildet ist, ist vorgesehen, dass das zwischen einer als ebener Schaltisch ausgebildeten Betonbauschalung und der Stirnwand der an dieser befestigbaren Einbaudose ein unmittelbar an der Fläche des Schaltisches befestigbares, eine Stützfläche bildendes Teil nach Art des Moduls angeordnet ist, dessen Stützfläche für die Stirnwand der Einbaudose, die Steckzapfen und Steckhülsen aufweist, mit denen die Stirnwand über entsprechend an ihr ausgebildete vorragende Steckzapfen und zurückliegende Steckhülsen steckverbindbar ist.

Dabei ist bevorzugt vorgesehen, dass das die Stützfläche bildende Teil auf seiner der Schalungsfläche zugewandten Seite Klebepads aufweist.

Das die Stützfläche bildende Teil ist nach Art der Module ausgebildet, wobei allerdings nur auf der Seite, die der Einbaudose zugewandt ist, entsprechende Steckzapfen und Steckhülsen vorgesehen sind, während auf der Seite des Moduls, die dem Schaltisch zugewandt ist, vornehmlich entsprechende Klebepads vorgesehen sind, die zunächst mit einem Schutzstreifen abgedeckt sind. Zur Anordnung des die Stützfläche bildenden Teils werden diese Schutzfolien abgezogen und das Teil kann mit den Klebepads auf die Schalungsfläche aufgeklebt werden.

Anschließend kann die Einbaudose, die entsprechende Steckzapfen und Steckhülsen aufweist, auf die Steckzapfen und Steckhülsen des die Stützfläche bildenden Teiles aufgerastet werden und somit lagegesichert gehalten sein.

Ausführungsbeispiele der Erfindung sind in der Zeichnung dargestellt und im folgenden näher beschrieben.

Es zeigt:
- Figur 1: eine erfindungsgemäße Anordnung in isometrischer Darstellung;
- Figur 2: eine weitere erfindungsgemäße Anordnung in isometrischer Ansicht;
- Figur 3: eine Einzelheit in der Ansicht gemäß Figur 1 gesehen;
- Figur 4: eine Variante einer Einzelheit in Draufsicht gesehen;
- Figur 5: eine weitere Einzelheit in Draufsicht gesehen;
- Figur 6: die Einzelheit im Schnitt VI/VI der Figur 5 gesehen;
- Figur 7 bis 9: eine Variante eines Modules in unterschiedlichen Ansichten;
- Figur 10: die Anordnung von zwei kreuzweise gegensinnig einander gesteckten Modulen in Ansicht;
- Figur 11: die Anordnung von jeweils zwei gegensinnig ineinander gesteckten Modulen übereinander in Steckverbindungslage;
- Figur 12: die Anordnung von kreuzweise angeordneten Modulen zwischen zwei Einbaudosen;
- Figur 13: ein Modul in einer Anordnung und Ausrichtung zur Aufnahme und Halterung eines Installationsrohres;
- Figur 14: ein eine Stützfläche bildendes Teil zur Anordnung an einen Schaltisch in Ansicht;
- Figur 15: das Teil in der Einbausollage mit aufgerasteter Einbaudose.

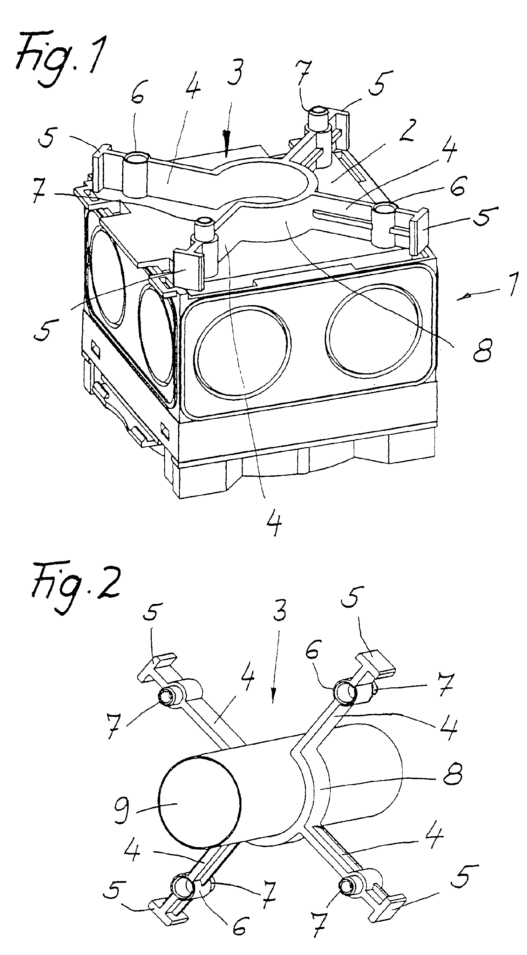

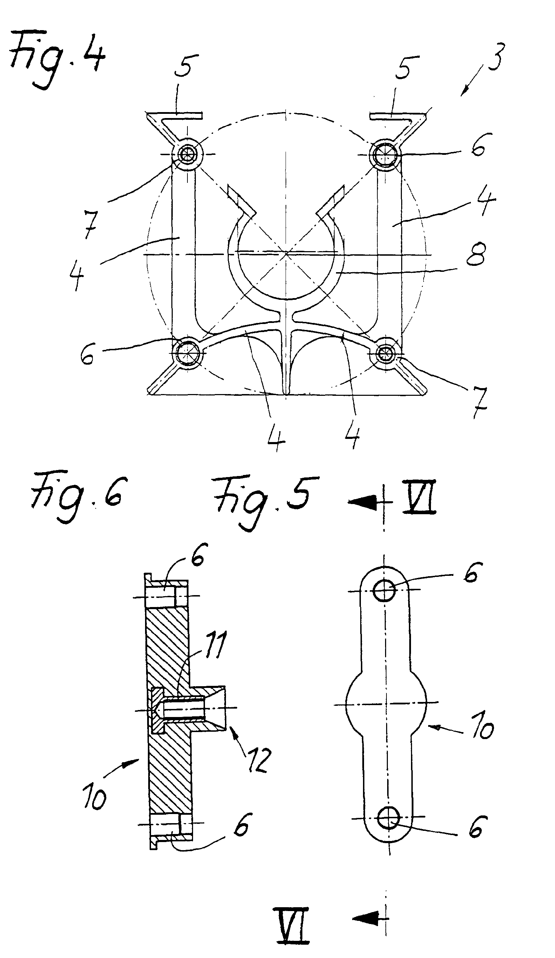

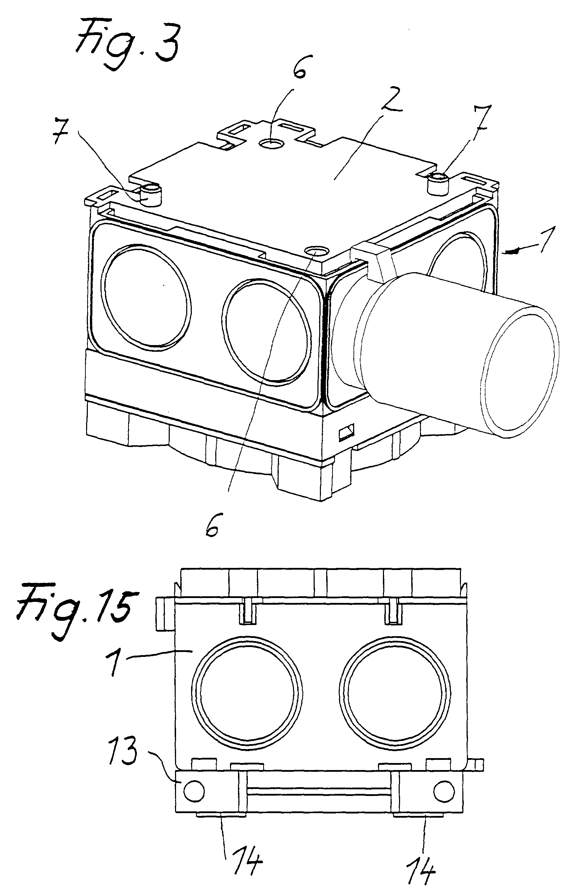

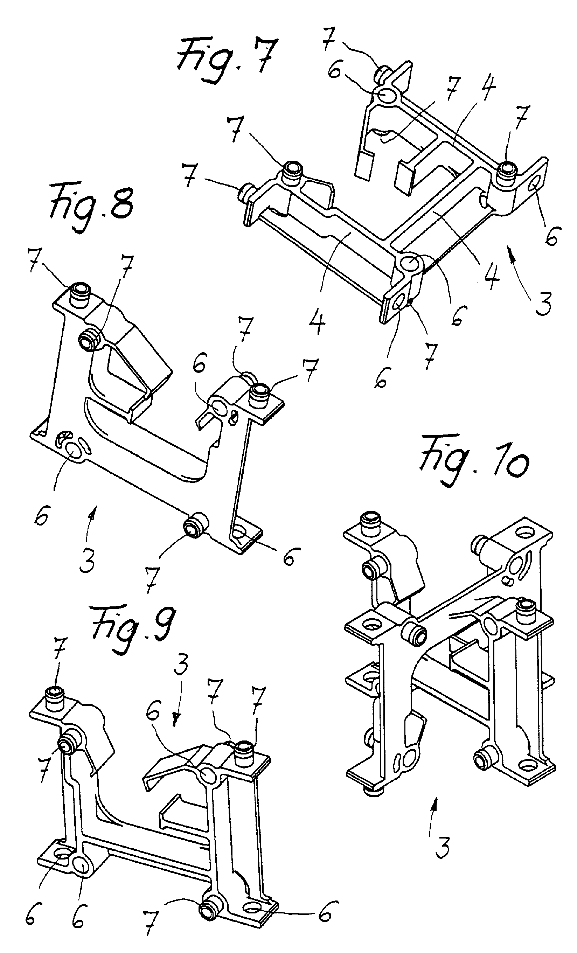

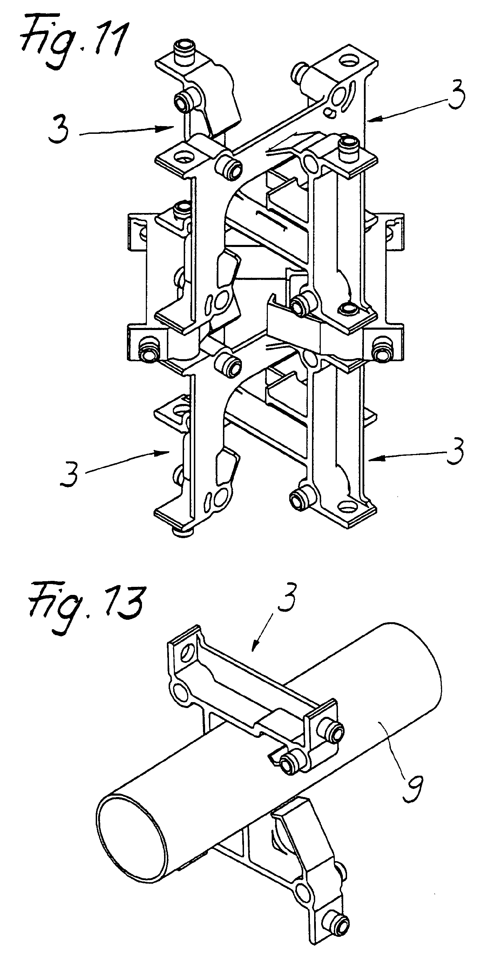

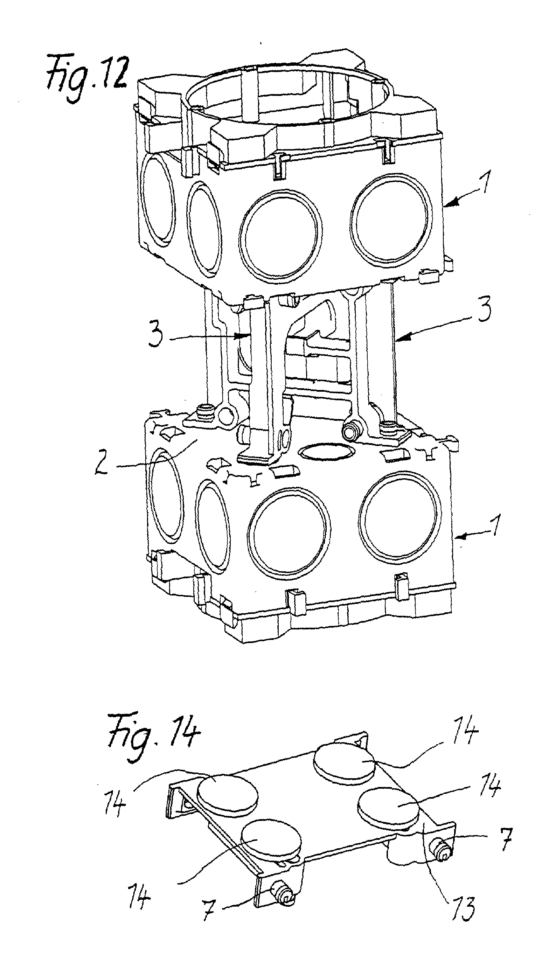

In der Zeichnungsfigur 1 ist eine Einbaudose 1 für die Betonbauinstallation mit einem hohlen Aufnahmeraum für elektrische Einrichtungen wie Leuchten, Dosen, Klemmen oder dergleichen elektrotechnische Installationselemente mit Seitenwandungen und Bodenwandung 2 sowie einer Stirnwand auf der der Bodenwand 2 abgewandten Seite gezeigt. Die in den Zeichnungen nicht ersichtliche Stirnwand weist eine im wesentlichen kreisrunde Installationsöffnung auf, wobei insbesondere bei liegender Betonbauschalung eine Einbaudose 1 mit der Stirnwand an der Schalung befestigbar ist oder auch anstelle der Einbaudose 1 ein Gegenlager an der Schalung befestigbar ist. Die Einbaudose 1 oder das Gegenlager kann über einen Abstandhalter mit einer zweiten Einbaudose gekoppelt werden, deren Stirnwand der Schalung abgewandt orientiert ist. Da die Dicke der entsprechenden Wandung des zu erzeugenden Betonteiles unterschiedlich bemessen sein kann, ist der Abstandhalter durch vorzugsweise eine Vielzahl von Modulen 3 gebildet. Jedes Modul 3 weist mehrere Arme 4 auf. Deren in der Zeichnungsfigur 1 obere und untere Randkanten spannen zwei voneinander im Modulmaß beabstandete Stützebenen auf, deren erste gemäß Figur 1 in der Einbausollage an der Außenseite der Bodenwandung 2 der Einbaudose 1 anliegt und deren zweite an der Bodenwandung einer zweiten Einbaudose 1 oder an einer entsprechenden Fläche eines Gegenlagers oder an der ersten Stützebene, gebildet durch die entsprechenden Randkanten eines zweiten Moduls 3, anliegt. Es können in dieser Weise mehrere Module 3 übereinander angeordnet sein. Auf diese Weise kann die Länge bzw. Höhe des Distanzhalters entsprechend der Höhe des Moduls 3 eingestellt werden.

Die Arme 4 des Moduls 3 sind durch schmale Stege mit zueinander parallelen oberen und unteren Randkanten gebildet, die die Stützebenen aufspannen bzw. bilden, wobei die Steghöhe die Modulhöhe bestimmt. Die Steghöhe der Arme 4 beträgt vorzugsweise etwa einen Zentimeter. Wie insbesondere aus Figur 1 ersichtlich, sind die vier Arme 4 in Kreuzform zueinander gerichtet. An ihren freien Enden weisen die Arme 4 kurze Querstege 5 auf, deren Höhe gleich der Steghöhe der Arme 4 ist, so dass sie über keine der Stützebenen vorragen. Im Prinzip sind die Enden der Arme 4 dadurch etwa T-förmig ausgebildet.

Die Module 3 sind miteinander bzw. mit der Bodenwandung 2 der Einbaudose oder der Fläche des entsprechenden Gegenlagers steckverbindbar. Dazu weisen sie als Steckverbindungsmittel Steckhülsen 6 und Steckzapfen 7 auf. Ebensolche Steckverbindungsmittel (6, 7) sind an der Bodenwandung 2 der Einbaudose in Figur 3 ersichtlich. Jeder der vier Arme 4 weist äquidistant vom Kreuzungsmittelpunkt der Arme 4 eine Steckhülse 6 und einen Steckzapfen 7 auf, die koaxial zueinander gerichtet sind. Dabei sind die Steckhülsen und Steckzapfen der benachbarten Arme 4 jeweils entgegengesetzt orientiert, so dass die Steckzapfen 7 abwechselnd nach oben bzw. unten gerichtet sind und die entsprechenden Steckhülsen 6 analog abwechselnd nach unten und oben gerichtet sind. Auf diese Weise kann das Modul 3 mit der Bodenwandung 2 der Einbaudose 1 steckverbunden werden, und es können gleich orientierte weitere Module 3 auf das entsprechende Modul aufgesteckt werden. Auf das letzte Modul des so gebildeten Distanzstückes kann wiederum der Boden 2 einer weiteren Einbaudose 1 aufgesteckt werden oder auf ein entsprechendes Gegenlager mit entsprechenden Zapfen und Hülsenausbildungen.

Die Arme 4 jedes Moduls 3 schließen mittig des Moduls 3 an einen einstückig angeformten Rohrclip 8 an, der aus einem radial einseitig offenen ringförmigen Steg gebildet ist. Die Steghöhe dieses Steges ist gleich bemessen wie die Steghöhe der Arme 4. Radial von diesem ringförmigen Steg ragen die Arme 4 des Moduls 3 ab. Dabei schließen zwei Arme an die offenen Enden der Ringform des ringförmigen Steges an. Auf diese Weise ist es möglich, ein Leerrohr in den als Rohrclip 8 dienenden ringförmigen Steg radial einzuführen und durch die Federelastizität des Materials einzuclipsen. Das Leerrohr kann beispielsweise zur Verbindung zwischen zwei durch die Module auf Abstand gehalterten Einbaudosen dienen.

Das entsprechende Modul 3 kann auch, wie aus Figur 2 ersichtlich, mehrfach in Abstand voneinander auf ein Installationsrohr 9 radial aufgeclipst werden. Dabei bilden dann zwei benachbarte Arme 4 des Moduls 3 Stützen, die sich auf einer Stützfläche, beispielsweise der Schalfläche, abstützen, so dass das Installationsrohr 9 auf Abstand von der entsprechenden Stützfläche gehalten ist.

Sowohl die Einbaudose 1 als auch das Modul 3 besteht vorzugsweise aus Kunststoff.

Wie insbesondere aus Figur 4 ersichtlich, kann das Modul 3 auch in der Draufsicht eine angenäherte U-Form aufweisen, wobei vorzugsweise die in U-Form ausgebildeten Arme 4 an den freien Enden und in den Ecken die entsprechenden Steckhülsen 6 und die Steckzapfen 7 aufweisen. Hierbei ist der Rohrclip 8 über einen Steg mit der Basis der U-Form des Moduls 3 verbunden, wobei die Öffnung des Rohrclips 8 gleichgerichtet zur Öffnung der U-Form verläuft. Im Ausführungsbeispiel sind an den Schenkelenden der Schenkel der U-Form des Moduls 3 sich parallel zu einer Stützfläche erstreckende Stützstege ausgebildet, die bei Verwendung als Abstandhalter für ein Installationsrohr analog der Darstellung in Figur 2 beispielsweise mit Klebstoff oder mit Klebepads versehen sein können, so dass die entsprechenden Flächen der Stützstege an die Stützfläche, insbesondere an die entsprechenden Schalung angeklebt werden können. Es ist somit ein sicherer und stabiler Halt des Abstandhalters gewährleistet, der das entsprechende Installationsrohr 9 stützt. Bei dieser Ausführungsform ist die Ausbildung des Rohrclips 8 derart gestaltet, dass dessen Schenkel frei federn können, so dass das Auffedern beim Einstecken des Installationsrohres nicht durch die umgebende Grundform des Moduls 3 behindert ist.

Dies ist auch bei einer Anordnung hilfreich, wie sie in Figur 1 analog gezeigt ist, weil dann, wenn das entsprechende Modul auf die Bodenwand 2 der Einbaudose 1 aufgesetzt und mit den Zapfen und Hülsen steckverbunden ist, ein Auffedern der Clipform zum Einführen und Verclipsen eines Rohres möglich ist, ohne dass diese Bewegung durch die schon steckbefestigten Schenkel oder Arme des Moduls 3 behindert wird.

In Figur 5 und 6 ist ein Stützelement 10 gezeigt, welches außenseitig an der Bodenwandung 2 einer Einbaudose 1 befestigbar, insbesondere steckbefestigbar ist. Das Stützelement 10 haltert eine Schraubenmutter 11, wobei die Schraubenmutter in das Material des aus Kunststoff bestehenden Stützelementes 10 eingebettet ist und lediglich einen in Sollage zur Bodenwandung 2 hin offenen Schraubkanal 12 aufweist, dessen Mündung in der Einbausollage an der Bodenwandung 2 anliegt. Die Bodenwandung 2 ist im Bereich der Mündung von dem Gewindeschaft eines in die Installationsöffnung der Einbaudose 1 eingesetzten Schraubhakens oder dergleichen durchgreifbar, so dass ein solcher Schraubhaken in die Schraubenmutter 11 eingeschraubt werden kann. Ein solcher Schraubhaken kann beispielsweise zum Abhängen einer Deckenleuchte dienen. Das Stützelement 10 weist zwei Arme mit Steckhülsen 6 analog der Ausbildung der Module 3 auf, so dass eine entsprechende Steckverbindung mit der analog ausgebildeten Bodenwandung 2 der Einbaudose 1 ermöglicht ist. In der Einbausollage ist die vom Stützelement 10 umfasste Schraubenmutter 11 mittig der Bodenwandung 2 angeordnet. Wie insbesondere aus der Schnittdarstellung gemäß Figur 6 ersichtlich, ist die Schraubenmutter 11 als Gewindehülse mit Polygonkopf ausgebildet, wobei der Polygonkopf drehfest im Material des Stützelementes 10 eingebettet ist. Dabei ist diese Gewindehülse in einer sacklochartigen Ausnehmung des Stützelementes 10 eingebettet. Die Ausnehmung weist eine in Richtung auf die Bodenwandung 2 gegenüber der Schraubenmutter 11 bzw. der Gewindehülse vorragende Mündung auf, die konisch erweitert ist. Hierdurch ist das Einfädeln eines entsprechenden Gewindeschaftes eines durch die Bodenwandung 2 gedrückten Schraubhakens in einfacher Weise möglich. Zudem beginnt die Gewindeausbildung erst mit Abstand von der Bodenwandung (in Einbausollage), so dass die Gefahr der Verschmutzung des Gewindes durch Betonschlämme oder dergleichen vermieden ist.

Bei den Ausführungsbeispielen gemäß Figur 7 bis 18 sind die entsprechenden Steckhülsen 6 und Steckzapfen 7 als druckknopfartige Verbindungsmittel ausgebildet. Dabei weisen die Steckzapfen 7 mindestens eine umlaufende Rastwulst und die Steckhülsen 6 mindestens eine entsprechend umlaufende Rastnut oder Rastkante auf, so dass in der Stecklage die Rastwulst in die Nut oder hinter die Rastkante greift. Hierdurch wird eine besonders gute Lagesicherung der Teile zueinander gewährleistet, die auch beim Betonieren wirksam ist und ein Aufschwimmen der Teile relativ zueinander verhindert. Dabei sind, wie insbesondere aus Figur 7 bis 9 ersichtlich, die eine U-Form bildenden Arme der Module 3 an den freien Schenkelenden und in den Übergangsbereichen der Schenkel zur Basis der U-Form mit Steckhülsen 6 bzw. Steckzapfen 7 in abwechselnder Anordnung vorgesehen. Die abwechselnd angeordneten Steckhülsen 6 und Steckzapfen 7 sind in den Ecken einer quadratischen Grundform nach oben und nach unten aus dem Modul 3 ausmündend bzw. vorragend vorgesehen, wobei eine entsprechende Ausrichtung und Anordnung natürlich auch an der Einbaudose 1 oder anderen Steckverbindungselementen vorgesehen ist. Um solche Module 3 nicht nur in horizontaler Orientierung übereinander steckverbinden zu können, sondern bei Überwindung größerer Abstände auch eine aufrechte Anordnung der Module als Abstandshalter zu ermöglichen und dennoch die Steckverbindung zu gewährleisten, ist zusätzlich vorgesehen, dass an zwei zueinander parallelen Randkanten, die durch die gedachte Verbindung zweier Enden benachbarter Arme oder der benachbarten Eckbereiche der U-Form gebildet sind, jeweils an der ersten Randkante weitere Steckhülsen 6 und an der zweiten Randkante weitere Steckzapfen 7 vorgesehen sind, die paarweise (jeweils eine Steckhülse 6 und ein Steckzapfen 7) koaxial zueinander ausgerichtet sind, und deren Mittelachsen parallel zu den Stützebenen des Moduls verlaufen. Dabei ist der Abstand der Steckhülsen 6 der ersten Randkante voneinander und der Abstand der Steckzapfen 7 der zweiten Randkante voneinander so abgestimmt, dass er dem diagonalen Abstand zweier Steckzapfen 7 bzw. Steckhülsen 6 der Bodenwandung 2 einer Einbaudose 1 oder des entsprechenden Gegenlagers entspricht. Ebenso ist es auch denkbar, auf solche Module, die aufrecht angeordnet sind, weitere Module in flächiger, nicht aufgerichteter Lage aufzusetzen und aufzurasten.

Wie insbesondere aus Figur 10 bis 12 ersichtlich, können zwei solcher Module 3 kreuzweise gegensinnig ineinander gesteckt werden, wobei diese Möglichkeit durch die U-Form der Module 3 begünstigt wird. Auf diese Weise wird erreicht, dass die Steckzapfen 7 der zweiten Randkante des ersten Moduls 3 und die Steckhülsen 6 der ersten Randkante des zweiten Moduls 3 sowie die Steckhülsen 6 der ersten Randkante des ersten Moduls 3 und die Steckzapfen 7 der zweiten Randkante des zweiten Moduls 3 jeweils in einer der Ebenen liegen, die die Steckebenen beispielsweise für den Boden der Einbaudose 1 oder für ein dazu paralleles Gegenlager oder für weitere kreuzweise ineinander gesteckte Module oder auch für ein flächig ausgerichtetes weiteres Modul ist.

Wie insbesondere aus Figur 13 ersichtlich, sind an den Armen 4 des Moduls 3 Haltestege ausgebildet, die an der Öffnung der U-Form eine federnde Ausbildung haben, und das Einsetzen eines Installationsrohres 9 ermöglichen, welches durch die vorzugsweise abgewinkelten Enden der federnden Stege gehalten ist. Dabei stützt sich in der Sollage das Installationsrohr auf einem weiteren relativ steifen Steg nach unten hin ab, der etwa mittig des einen Armes des Moduls 3 ausgebildet ist. Die Anordnung der Aufnahme für das Installationsrohr 9 ist so getroffen, dass dieses exzentrisch in der Öffnung der U-Form liegt, und zwar in der Einbausollage mit größerem Abstand von der gedanklich unten befindlichen Schalungsfläche, auf der das Modul in der Figur 13 gezeigten Lage aufsteht. Hierdurch ist der Abstand von der Schalfläche etwas größer, so dass die aufzubringende Betonmasse das Installationsrohr 9 besser hinterfließen kann.

In Figur 14 und 15 ist eine weitere Ausbildung gezeigt, wobei zwischen einer als ebener Schaltisch ausgebildeten Betonschalung, die beispielsweise in Figur 15 unterhalb des dargestellten Teiles angeordnet ist und der Stirnwand oder Bodenwand der an dieser befestigbaren Einbaudose 1 ein unmittelbar an der Fläche des Schaltisches befestigbares, eine Stützfläche bildendes Teil 13 vorgesehen ist, dessen Stützfläche für die Stirnwand oder Bodenwand der Einbaudose 1 die Steckzapfen und Steckhülsen aufweist, mit denen die Stirnwand oder Bodenwand über entsprechende an ihr ausgebildete vorragende Steckzapfen und zurückliegende Steckhülsen steckverbindbar ist. Die relative Unterseite des Teiles 13, die der Schalungsfläche zugewandt ist, ist mit Klebepads 14 versehen, so dass das Teil 13 an der vorbestimmten Lage an der Schalungsfläche klebbefestigbar ist und anschließend die Einbaudose 1 oder ein anderes notwendiges Installationselement mit gleicher Ausbildung von Rast- und Steckverbindungsmitteln aufgebracht werden kann.

Insbesondere in Figur 14 ist auch gezeigt, dass die Steckzapfen 7 längsgeschlitzt sind, was herstellungstechnisch und bezüglich der Handhabung vorteilhaft ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anordnung von Einbaudosen (1) für die Betonbauinstallation mit einem Aufnahmeraum für elektrische Einrichtungen wie Leuchten, Dosen, Klemmen oder dergleichen elektrotechnische Installationselemente mit Seitenwandungen, Bodenwandung (2) und einer Stirnwand auf der der Bodenwandung (2) abgewandten Seite, wobei die Stirnwand eine im wesentlichen kreisrunde Installationsöffnung aufweist, wobei insbesondere bei liegender Betonbauschalung eine Einbaudose (1) mit der Stirnwand an der Schalung befestigbar ist oder ein Gegenlager an der Schalung befestigbar ist, die Einbaudose (1) oder das Gegenlager über einen Abstandhalter mit einer zweiten Einbaudose (1) oder mit der ersten Einbaudose (1) gekoppelt ist, deren Stirnwand der Schalung abgewandt orientiert ist, **dadurch gekennzeichnet, dass** der Abstandhalter durch mindestens ein Modul (3) gebildet ist, welches mehrere in einer Ebene liegende Arme (4) aufweist, deren obere und untere Randkanten zwei voneinander in einem Modulmaß beabstandete Stützebenen aufspannen, deren erste in einer Einbausollage an der Außenseite der Bodenwandung (2) anliegt, deren zweite in dieser Einbausollage an der Bodenwandung (2) der zweiten Einbaudose (1) oder an einer entsprechenden Fläche des Gegenlagers oder an der ersten Stützebene (gebildet durch die Randkanten) eines weiteren Moduls (3) anliegt.

2. Anordnung nach Anspruch 1, **dadurch gekennzeichnet, dass** die Arme (4) des Moduls (3) durch schmale Stege mit zueinander parallelen oberen und unteren Randkanten gebildet sind, die die Stützebenen aufspannen bzw. bilden, wobei die Steghöhe die Modulhöhe bestimmt.

3. Anordnung nach Anspruch 1 oder 2, **dadurch gekennzeichnet, dass** die Steghöhe der Arme (4) wenige Zentimeter, vorzugsweise etwa einen Zentimeter beträgt.

4. Anordnung nach einem der Ansprüche 1 bis 3, **dadurch gekennzeichnet, dass** vier Arme (4) in Kreuzform zueinander gerichtet verlaufen.

5. Anordnung nach einem der Ansprüche 1 bis 3, **dadurch gekennzeichnet, dass** die Arme (4) eine angenäherte U-Form bilden.

6. Anordnung nach einem der Ansprüche 1 bis 5, **dadurch gekennzeichnet, dass** die Arme (4) an ihren freien Enden kurze Querstege (5) aufweisen, deren Höhe gleich der Steghöhe der Arme (4) ist.

7. Anordnung nach einem der Ansprüche 1 bis 6, **dadurch gekennzeichnet, dass** die Module (3) miteinander und mit der Bodenwandung (2) der Einbaudose(n) (1) bzw. der Fläche des Gegenlagers steckverbindbar sind.

8. Anordnung nach Anspruch 7, **dadurch gekennzeichnet, dass** die Steckverbindungsmittel als Steckhülsen (6) und Steckzapfen (7) ausgebildet sind.

9. Anordnung nach Anspruch 8, **dadurch gekennzeichnet, dass** die Steckhülsen (6) und Steckzapfen (7) druckknopfartige Verbindungsmittel bilden.

10. Anordnung nach einem der Ansprüche 8 oder 9, **dadurch gekennzeichnet, dass** die Steckzapfen (7) mindestens eine umlaufende Rastwust und die Steckhülsen (6) mindestens eine entsprechende umlaufende Rastnut oder Rastkante aufweisen, in die oder hinter die die Rastwulst in der Steckverbindungslage greift, wobei die Steckzapfen (7) vorzugsweise längsgeschlitzt sind.

11. Anordnung nach einem der Ansprüche 7 bis 10, **dadurch gekennzeichnet, dass** jeder der Arme (4) äquidistant vom Kreuzungsmittelpunkt der Arme (4) orthogonal zum Längsverlauf der Arme (4) eine Steckhülse (6) und einen Steckzapfen (7) aufweisen, die koaxial zueinander gerichtet sind, dass die benachbarten Arme (4) die Steckhülsen (6) und Steckzapfen (7) in entgegengesetzter Orientierung gerichtet aufweisen, und dass die Bodenwandung (2) der Einbaudose(n) (1) bzw. die Fläche des Gegenlagers an entsprechenden Stellen jeweils eine Steckhülse (6) oder einen Steckzapfen (7) aufweisen.

12. Anordnung nach einem der Ansprüche 7 bis 10, **dadurch gekennzeichnet, dass** die eine U-Form bildenden Arme (4) am freien Schenkelende und in den Übergangsbereichen der Schenkel zur Basis der U-Form Steckhülsen (6) bzw. Steckzapfen (7) aufweisen, wobei die Steckhülsen (6) und Steckzapfen (7) in Umlaufrichtung der U-Form wechselnde Orientierung aufweisen und die Bodenwandung (2) der Einbaudose (n) (1) bzw. die Fläche des Gegenlagers an entsprechenden Stellen abwechselnd jeweils eine Steckhülse (6) oder einen Steckzapfen (7) aufweisen.

13. Anordnung nach einem der Ansprüche 1 bis 12, **dadurch gekennzeichnet, dass** jedes Modul (3) an zwei zueinander parallelen Randkanten, die durch die gedachte Verbindung zweier Enden benachbarter Arme (4) oder der benachbarten Eckbereiche der U-Form gebildet sind, jeweils an der ersten Randkante Steckhülsen (6) und an der zweiten Randkante Steckzapfen (7) aufweisen, die paarweise (jeweils eine Steckhülse (6) und ein Steckzapfen (7)) koaxial zueinander ausgerichtet sind und deren Mittelachsen parallel zu den Stützebenen des Moduls (3) verlaufen, wobei der Abstand der Steckhülsen (6) der ersten Randkante voneinander und der Abstand der Steckzapfen (7) der zweiten Randkante voneinander dem diagonalen Abstand zweier Steckzapfen (7) bzw. zweier Steckhülsen (6) der Bodenwandung (2) der Einbaudose (1) bzw. des Gegenlagers entspricht.

14. Anordnung nach Anspruch 13, **dadurch gekennzeichnet, dass** zwei Module (3) kreuzweise gegensinnig ineinander steckbar sind, so dass die Steckzapfen (7) der zweiten Randkante des ersten Moduls (3) und die Steckhülsen (6) der ersten Randkante des zweiten Moduls (3) und die Steckhülsen (6) der ersten Randkante des ersten Moduls (3) sowie die Steckzapfen (7) der zweiten Randkante des zweiten Moduls (3), jeweils in einer der Ebenen liegen, die die Steckebenen für den Boden (2) der Einbaudose (1) oder für das Gegenlager oder für weitere kreuzweise ineinander gesteckte Module (3) ist.

15. Anordnung nach einem der Ansprüche 1 bis 14, **dadurch gekennzeichnet, dass** die Arme (4) jedes Moduls (3) an einen mittig oder außermittig des Moduls (3) ausgebildeten Rohrclip (8) anschließen, der aus einem radial einseitig offenen ringförmigen Steg oder aus einer quer zur Rohrclipachse einseitig offenen Haltesteganordnung gebildet ist, der die gleiche Steghöhe wie die Arme (4) aufweist und von dem radial die Arme (4) des Moduls (3) abragen, oder dass die in U-Form ausgebildeten Arme (4), die an den Enden und in den Ecken die Steckhülsen (6) und Steckzapfen (7) aufweisen, einen außermittig oder mittig des Moduls (3) angeordneten Rohrclip (8) umfassen, der aus einem radial einseitig offenen ringförmigen Steg oder aus einer quer zur Rohrclipachse einseitig offenen Haltesteganordnung gebildet ist, der oder die die gleiche Steghöhe wie die Arme (4) aufweist, wobei die Öffnung des Rohrclips (8) gleichgerichtet zur Öffnung der U-Form verläuft.

16. Modul nach einem der Ansprüche 1 bis 15, **dadurch gekennzeichnet, dass** mindestens ein Modul (3),
vorzugsweise mehrere mit Abstand voneinander angeordnete Module (3), auf ein Installationsrohr (9) aufgeclipst ist bzw. sind, wobei zwei benachbarte Arme (4) des Moduls (3) oder die Schenkelenden oder ein Schenkel oder die Basis des U-förmigen Moduls (3) auf einer Stützfläche abstützbar sind und das Installationsrohr (9) auf Abstand von der Stützfläche halten.

17. Modul nach Anspruch 16, **dadurch gekennzeichnet, dass** an den Enden mindestens zweier benachbarter Arme (4)oder an den Schenkelenden der U-Form des Moduls (3) sich parallel zu einer Stützfläche erstreckende Stützstege ausgebildet sind.

18. Modul nach Anspruch 17, **dadurch gekennzeichnet, dass** die Stützstege an der Stützfläche klebebefestigbar sind.

19. Modul nach Anspruch 18, **dadurch gekennzeichnet, dass** die Stützstege auf ihrer der Stützfläche zugewandten Fläche Klebemittel aufweisen.

20. Modul nach einem der Ansprüche 1 bis 19, **dadurch gekennzeichnet, dass** das Modul (3) aus Kunststoff besteht.

21. Anordnung von Einbaudosen (1) für die Betonbauinstallation mit Seitenwandungen, Bodenwandung (2) und Stirnwand mit Installationsöffnung, insbesondere nach einem der Ansprüche 1 bis 15, **dadurch gekennzeichnet, dass** an der Bodenwandung (2) außenseitig ein Stützelement (10) befestigbar ist, welches eine Schraubenmutter (11) haltert, wobei die Schraubenmutter (11) in das Material des Stützelements (10) eingebettet ist und lediglich einen in Sollage zur Bodenwandung (2) hin offenen Einschraubkanal (12) aufweist, dessen Mündung an der Bodenwandung (2) anliegt, und dass die Bodenwandung (2) im Bereich der Mündung von dem Gewindeteil eines in die Installationsöffnung der Einbaudose (1) eingesetzten Schraubenhakens durchgreifbar ist.

22. Anordnung nach Anspruch 21, **dadurch gekennzeichnet, dass** das Stützelement (10) mindestens zwei Arme mit Steckhülsen (6) und Steckzapfen (7) aufweist, die auf entsprechende Steckzapfen (7) bzw. in entsprechende Steckhülsen (6) der Bodenwandung (2) steckbar sind.

23. Anordnung nach einem der Ansprüche 21 bis 22, **dadurch gekennzeichnet, dass** die vom Stützelement (10) umfasste Schraubenmutter (11) in Montagesollage mittig der Bodenwandung (2) angeordnet ist.

24. Anordnung nach einem der Ansprüche 21 bis 23, **dadurch gekennzeichnet, dass** die Schraubenmutter (11) als Gewindehülse mit Polygonkopf ausgebildet und drehfest im Material des Stützelementes (10) eingebettet ist.

25. Anordnung nach einem der Ansprüche 21 bis 24,**dadurch gekennzeichnet, dass** die Schraubenmutter insbesondere die Gewindehülse, in einer sacklochartigen Ausnehmung des Stützelemtes (10) angeordnet ist, wobei die Ausnehmung eine in Richtung auf die Bodenwandung (2) gegenüber der Schraubenmutter bzw. Gewindehülse vorragende Mündung auf weist, die insbesondere etwa konisch erweitert ist.

26. Anordnung nach einem der Ansprüche 1 bis 25, **dadurch gekennzeichnet, dass** zwischen einer als ebener Schaltisch ausgebildeten Betonbauschalung und der Stirnwand der an dieser befestigbaren Einbaudose (1) ein unmittelbar an der Fläche des Schaltisches befestigbares, eine Stützfläche bildendes Teil (13) nach Art des Moduls (3) angeordnet ist, dessen Stützfläche für die Wandung der Einbaudose (1) die Steckzapfen (7) und Steckhülsen (6) aufweist, mit denen die Wandung über entsprechend an ihr ausgebildete vorragende Steckzapfen (7) und zurückliegende Steckhülsen (6) steckverbindbar ist.

27. Anordnung nach Anspruch 26, **dadurch gekennzeichnet, dass** das die Stützfläche bildende Teil (13) auf seiner der Schalungsfläche zugewandten Seite Klebepads (14) aufweist.
